# EUROPÄISCHE PATENTANMELDUNG

(11) **EP 0 895 338 A2**
(43) Veröffentlichungstag der Anmeldung: **03.02.1999**
(21) Anmeldenummer: 98113772.2
(22) Anmeldetag: 23.07.1998
(51) Int. Cl.: H02M 1/12, H02M 3/28, H04B 15/00

(54) **Verfahren zur Verringerung von Störungen in einem ein Schaltnetzteil aufweisenden elektronischen Gerät**

(30) Priorität: 02.08.1997 DE 19733583
(71) Anmelder: GRUNDIG Aktiengesellschaft, 90762 Fürth (DE)
(72) Erfinder: Pirner, Reinhard, 90762 Fuerth (DE); Ritter, Kai-Uwe, 90762 Fuerth (DE)

(57) **Zusammenfassung**

Die Erfindung betrifft ein Verfahren zur Verringerung von Störungen in einem ein Schaltnetzteil aufweisenden elektronischen Gerät. Bei diesem Verfahren wird aus der Netzwechselspannung eine Gleichspannung erzeugt und diese Gleichspannung unter Verwendung eines Schalttransistors periodisch an eine primärseitige Wicklung eines Transformators gelegt. Der Schalttransistor wird mit einem rechteckförmigen Signal angesteuert, dessen Impulsbreite in Abhängigkeit von auf der Sekundärseite des Transformators vorliegenden Lastverhältnissen geregelt wird. Die Frequenz des rechteckförmigen Signals ist derart gewählt, daß dessen Oberwellen außerhalb eines vorgegebenen Frequenzbereiches liegen. Die Frequenz des rechteckförmigen Signals bleibt bei sich ändernden Lastverhältnissen konstant. Weiterhin betrifft die Erfindung ein elektronisches Gerät, in welchem das beanspruchte Verfahren realisiert ist.

## Beschreibung

Die Erfindung betrifft ein Verfahren zur Verringerung von Störungen in einem ein Schaltnetzteil aufweisenden elektronischen Gerät mit den im Oberbegriff des Anspruchs 1 angegebenen Merkmalen. Weiterhin betrifft die Erfindung ein elektronisches Gerät mit einem Schaltnetzteil mit den im Oberbegriff des Anspruchs 4 angegebenen Merkmalen.

Aus dem im Franzis-Verlag erschienen Buch "Fernsehtechnik ohne Ballast", 15. Auflage, 1988, Seite 264 bis 269, sind bereits Schaltnetzteile und zugehörige Ansteuerschaltungen bekannt. Derartige Schaltnetzteile werden insbesondere dazu verwendet, um aus der Netzwechselspannung eine oder mehrere Versorgungsgleichspannungen für ein elektronisches Gerät zu erzeugen. Zu diesem Zweck wird zunächst aus der Netzwechselspannung eine Gleichspannung erzeugt. Diese Gleichspannung wird dann unter Verwendung eines Schalttransistors zerhackt bzw. periodisch an eine primärseitige Wicklung eines Transformators angelegt. An den sekundärseitigen Wicklungen des Transformators stehen dann die gewünschten Gleichspannungen zur Verfügung. Der primärseitige Schalttransistor wird mit einem rechteckförmigen Signal angesteuert, dessen Impulsbreite in Abhängigkeit von auf der Sekundärseite des Transformators vorliegenden Lastverhältnissen geregelt wird. Um eine Anpassung an die jeweils auf der Sekundärseite vorliegenden Lastverhältnisse zu erreichen, wird primärseitig die Frequenz und die Impulsbreite des rechteckförmigen Ansteuersignals für den Schalttransistor verändert.

Ein Nachteil derartiger bekannter Schaltnetzteile besteht darin, daß bei den primärseitigen Schaltvorgängen ein rechteckfömiger Strom fließt, der einen sehr hohen Oberwellengehalt aufweist. Diese Oberwellen fallen dann oft in einen vorgegebenen Frequenzbereich, in welchem innerhalb des elektronischen Gerätes eine Signalverarbeitung erfolgt, beispielsweise in den Empfangsbereich eines Rundfunkempfängers. Dadurch werden Störungen hervorgerufen. Zur Vermeidung dieser Störungen müssen bisher aufwendige Entstörmaßnahmen ergriffen werden, wie beispielsweise eine Abschirmung.

Ausgehend von diesem Stand der Technik liegt der Erfindung die Aufgabe zugrunde, ein Verfahren mit den im Oberbegriff des Anspruchs 1 angegebenen Merkmalen und ein elektronisches Gerät mit den im Oberbegriff des Anspruchs 4 angegebenen Merkmalen derart weiterzubilden, daß die durch den Oberwellengehalt des rechteckförmigen Ansteuersignals verursachten Störungen nicht mehr auftreten.

Diese Aufgabe wird bei einem Verfahren mit den im Oberbegriff des Anspruchs 1 angegebenen Merkmalen durch die im kennzeichnenden Teil des Anspruchs 1 angegebenen Merkmale und bei einem elektronischen Gerät mit den im Oberbegriff des Anspruchs 4 angegebenen Merkmalen durch die im kennzeichnenden Teil des Anspruchs 4 angegebenen Merkmale gelöst. Vorteilhafte Ausgestaltungen und Weiterbildungen der Erfindung ergeben sich aus den abhängigen Patentansprüchen.

Die Vorteile der Erfindung bestehen insbesondere darin, daß durch eine geeignete Wahl der Frequenz des rechteckförmigen Ansteuersignals für den Schalttransistor dafür gesorgt wird, daß die erzeugten Oberwellen außerhalb eines vorgegebenen Frequenzbereiches liegen. Damit erübrigen sich aufwendige Entstör- bzw. Abschirmmaßnahmen. Bei dieser Vorgehensweise wird im Unterschied zum Stand der Technik keine lastabhängige Nachregelung der Frequenz des rechteckförmigen Signal vorgenommen. Um den sich verändernden Lastverhältnissen auf der Sekundärseite gerecht zu werden, erfolgt beim beanspruchten Verfahren lediglich eine Veränderung der Impulsbreite des rechteckförmigen Ansteuersignals.

Mittels der im Anspruch 2 angegebenen Merkmale wird sichergestellt, daß die durch das rechteckförmige Ansteuersignal erzeugten Oberwellen außerhalb eines momentan ausgewählten Rundfunkempfangskanals liegen. Dadurch wird das Auftreten von durch den Oberwellengehalt des Ansteuersignals verursachten Störungen in einem ein Schaltnetzteil aufweisenden Rundfunkempfänger vermieden.

Die im Anspruch 3 angegebene Umschaltbarkeit der Frequenz des rechteckförmigen Signals in Abhängigkeit vom jeweiligen Rundfunkempfangskanal hat den Vorteil, daß für jeden Empfangskanal eine geeignete Frequenz des rechteckförmigen Signals gewählt werden kann, die sich - falls notwendig - von der zugehörigen Frequenz des rechteckförmigen Signals für den Nachbarkanal unterscheiden kann.

Im Anspruch 4 ist ein elektronisches Gerät angegeben, mittels dessen Merkmalen die beschriebenen Vorteile erreicht werden können.

Die Ansprüche 5 und 6 zeigen auf, wie in vorteilhafter Weise unter Verwendung eines Mikrocomputers und eines Frequenzgenerators ein jeweils geeignetes Referenzsignal zur Verfügung gestellt werden kann, mittels dessen der Oszillator der Regelschaltung synchronisiert wird.

Gemäß der Merkmale des Anspruchs 8 weist der Mikrocomputer einen Speicher auf, in welchem für die Empfangskanäle bereits ein Kennsignal für ein zugehöriges Referenzsignal abgespeichert ist. Diese Abspeicherung kann bereits werksseitig erfolgen, so daß der Benutzer von dieser Zuordnung befreit ist.

Weitere Vorteile der Erfindung ergeben sich aus der Erläuterung von Ausführungsbeispielen anhand der Figuren.

Es zeigt:
- **FIG 1**: ein erstes Ausführungsbeispiel für ein elektronisches Gerät gemäß der Erfindung und
- **FIG 2**: ein zweites Ausführungsbeispiel für ein elektronisches Gerät gemäß der Erfindung.

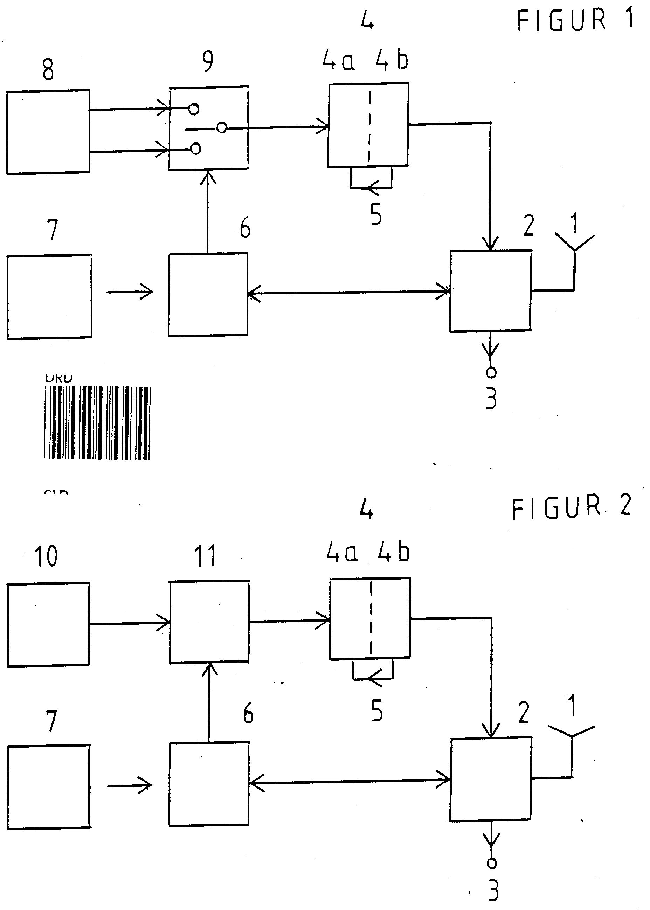

Das in der **FIG 1** gezeigte elektronische Gerät weist einen Antennenanschluß 1, ein Rundfunkempfangsteil 2, einen NF-Ausgang 3, ein Schaltnetzteil 4 mit einer Primärseite 4a, einer Sekundärseite 4b und einem Rückkopplungspfad 5, einen Mikrocomputer 6, eine Fernbedieneinheit 7, einen Frequenzgenerator 8 und einen Schalter 9 auf.

Das Empfangsteil 2 ist insbesondere dazu vorgesehen, aus einem über die Antenne 1 empfangenen Signal ein NF-Signal am Ausgang 3 zu erzeugen. Eine Auswahl eines gewünschten Empfangskanals erfolgt durch Eingabe eines Auswahlbefehls mittels der Tasten der Fernbedieneinheit 7. Dieser Befehl wird über eine Infrarotstrecke einem Infrarotdetektor und von dort aus dem Mikrocomputer 6 zugeführt. Dieser entnimmt aus einem Senderspeicher Abstimmsignale und führt diese dem Empfangsteil 2 zu.

Das Empfangsteil 2 benötigt im Betrieb eine oder mehrere Betriebsspannungen. Diese werden vom Schaltnetzteil 4 zur Verfügung gestellt. Dieses Schaltnetzteil 4 ist mit seiner Primärseite 4a an ein nicht gezeichnetes Wechselspannungsnetz angeschlossen. Aus diesem wird mittels eines Gleichrichters eine Gleichspannung erzeugt. Diese Gleichspannung wird unter Verwendung eines Schalttransistors periodisch an eine primärseitige Wicklung eines Transformators angelegt. Dabei wird der Schalttransistor mit einem rechteckförmigen Signal angesteuert, dessen Impulsbreite im Normalbetrieb in Abhängigkeit von auf der Sekundärseite des Transformators vorliegenden Lastverhältnissen geregelt wird. Zu diesem Zweck ist zwischen der Sekundärseite 4b und der Primärseite 4a ein Rückkopplungspfad 5 vorgesehen. Die über den Rückkopplungspfad übertragenen Signale werden zur Steuerung der Impulsbreite des Ansteuersignals für den Schalttransistor verwendet.

Weiterhin erzeugt der Mikrocomputer 6 in Ansprache auf das mittels der Bedieneinheit 7 eingegebene Kanalwahlsignal ein Steuersignal für den Schalter 9. Aufgrund dieses Steuersignals erfolgt eine Umsteuerung des Schalters 9 in seine obere oder untere Schaltstellung. Der Schalter 9 ist eingangsseitig mit den Ausgängen eines Frequenzgenerators 8 verbunden, an denen zwei verschiedene Frequenzsignale zur Verfügung gestellt werden. Je nach Stellung des Schalters 9 wird eines dieser Frequenzsignale an die Primärseite 4a des Schaltnetzteils weitergeleitet. Dort wird dieses Frequenzsignal als Referenzsignal zur Synchronisierung des Oszillators der Regelschaltung verwendet.

Die vom Frequenzgenerator 8 zur Verfügung gestellten Referenzfrequenzen wurden vom Gerätehersteller derart gewählt, daß für jeden möglichen Empfangskanal zumindest eine dieser Frequenzen sich dazu eignet, auf der Primärseite des Schaltnetzteils Ansteuersignale für den Schalttransistor zur Verfügung zu stellen, deren Oberwellengehalt außerhalb des jeweiligen Empfangskanals liegt. Vorzugsweise weist der Mikrocomputer 6 einen Speicher auf, in dem bereits werksseitig für jeden möglichen Rundfunkempfangskanal Kennsignale für diejenige der beiden Referenzfrequenzen abgespeichert sind, die im jeweiligen Kanal zu einem störungsfreien Empfang führen. Wird dann im Gerätebetrieb mittels der Bedieneinheit 7 einer der Kanäle ausgewählt, dann holt der Mikrocomputer aus dem Speicher dieses Kennsignal und steuert den Schalter 9 in der Weise, daß das jeweils geeignete Referenzsignal an die Primärseite des Schaltnetzteils geliefert wird.

In der **FIG 2** ist ein zweites Ausführungsbeispiel für die Erfindung gezeigt. Dieses unterscheidet sich vom ersten Ausführungsbeispiel im wesentlichen dadurch, daß am Ausgang des Frequenzgenerators 10 lediglich ein hochfrequentes Referenzsignal zur Verfügung gestellt wird, welches einem umschaltbaren Frequenzteiler 11 zugeführt wird. Dieser umschaltbare Frequenzteiler wird vom Mikrocomputer 6 angesteuert, der nach der Anwahl eines gewünschten Empfangskanals das Teilungsverhältnis des Frequenzteilers derart einstellt, daß am Ausgangs des Frequenzteilers ein geeignetes Referenzsigal zur Verfügung steht. Dieses wird dann ebenso wie beim ersten Ausführungsbeispiel dazu verwendet, den Oszillator der Regelschaltung auf der Primärseite 4a des Schaltnetzteils zu synchronisieren.

Selbstverständlich können gemäß der vorliegenden Erfindung auch mehr als zwei mögliche Referenzfrequenzen zur Verfügung gestellt werden.

Weiterhin ist die Erfindung nicht nur bei Rundfunkempfängern, wie beispielsweise Radioempfängern, Fernsehempfängern, Autoradios, usw., anwendbar, sondern bei allen elektronischen Geräten, die ein Schaltnetzteil aufweisen, und bei denen die Signalverarbeitung in einem bestimmten Frequenzbereich erfolgt. Mittels der Erfindung kann dafür gesorgt werden, daß die Oberwellen des rechteckförmigen Ansteuersignals für den Schalttransistor nicht in diesen Frequenzbereich fallen, so daß dort keine Störungen auftreten.

## Patentansprüche

1. Verfahren zur Verringerung von Störungen in einem ein Schaltnetzteil aufweisenden elektronischen Gerät, in welchem aus der Netzwechselspannung eine Gleichspannung erzeugt und diese Gleichspannung unter Verwendung eines Schalttransistors periodisch an eine primärseitige Wicklung eines Transformators gelegt wird, wobei der Schalttransistor mit einem rechteckförmigen Signal angesteuert wird, dessen Impulsbreite in Abhängigkeit von auf der Sekundärseite des Transformators vorliegenden Lastverhältnissen geregelt wird,
**dadurch gekennzeichnet, daß**
die Frequenz des rechteckförmigen Signals derart gewählt wird, daß dessen Oberwellen außerhalb eines vorgegebenen Frequenzbereiches liegen, und daß die Frequenz des rechteckförmigen Signals auch bei Änderungen der auf der Sekundärseite des Transformators vorliegenden Lastverhältnisse konstant ist.

2. Verfahren nach Anspruch 1,
**dadurch gekennzeichnet, daß**
die Frequenz des rechteckförmigen Signals derart gewählt ist, daß dessen Oberwellen außerhalb eines vorgegebenen Rundfunkempfangskanals liegen, und daß die Frequenz des rechteckförmigen Signals während des Empfangs von im vorgegebenen Rundfunkempfangskanal übertragenen Signalen konstant ist.

3. Verfahren nach Anspruch 2,
**dadurch gekennzeichnet, daß**
die Frequenz des rechteckförmigen Signals in Abhängigkeit vom jeweiligen Rundfunkempfangskanal umschaltbar ist.

4. Elektronisches Gerät mit einem Schaltnetzteil, auf dessen Primärseite ein Netzgleichrichter, eine einen Oszillator aufweisende Regelschaltung, ein Schalttransistor und eine Primärwicklung vorgesehen sind, wobei der Regelschaltung über einen Rückkopplungspfad ein von den sekundärseitigen Lastverhältnissen abhängiges Rückkopplungssignal zuführbar ist, und wobei die Regelschaltung zur Erzeugung eines rechteckförmigen, impulsbreitengeregelten Ansteuersignals für den Schalttransistor dient,
**dadurch gekennzeichnet, daß**
das Gerät weiterhin einen Mikrocomputer (6) und einen Frequenzgenerator (8; 10) aufweist, wobei der Frequenzgenerator zur Erzeugung von Referenzsignalen mit verschiedenen Frequenzen und der Mikrocomputer zur Auswahl einer dieser Referenzsignale vorgesehen ist, und daß das ausgewählte Referenzsignal dem Oszillator der Regelschaltung zu dessen Synchronisierung zuführbar ist.

5. Elektronisches Gerät nach Anspruch 4,
**dadurch gekennzeichnet, daß**
der Frequenzgenerator (8) mehrere Ausgänge aufweist, an denen jeweils eines der Referenzsignale zur Verfügung gestellt wird, daß der Frequenzgenerator ausgangsseitig mit einem Schalter (9) zur Auswahl eines der Referenzsignale verbunden ist und daß der Mikrocomputer (6) zur Schaltersteuerung vorgesehen ist.

6. Elektronisches Gerät nach Anspruch 4,
**dadurch gekennzeichnet, daß**
der Frequenzgenerator einen Referenzoszillator (10) und einen an diesen angeschlossenen umschaltbaren Frequenzteiler (11) aufweist und daß der Mikrocomputer (6) zur Steuerung des Frequenzteilers vorgesehen ist.

7. Elektronisches Gerät nach einem oder mehreren der Ansprüche 4 bis 6,
**dadurch gekennzeichnet, daß**
es ein Rundfunkempfänger ist, der eine Bedientastatur zur Eingabe eines Auswahlsignals für einen Rundfunkempfangskanal aufweist, und daß der Mikrocomputer die Auswahl eines der Referenzsignale in Ansprache auf das eingegebene Auswahlsignal derart steuert, daß die im Schaltnetzteil erzeugten Oberwellen außerhalb des ausgewählten Rundfunkempfangskanals liegen.

8. Elektronisches Gerät nach Anspruch 7,
**dadurch gekennzeichnet, daß**
der Mikrocomputer einen Speicher aufweist, in welchem für die Empfangskanäle jeweils ein Kennsignal für ein dem Empfangsskanal zugeordnetes Referenzsignal vorgesehen ist.
